(19) Europäisches Patentamt
European Patent Office
Office européen des brevets

(11) **EP 1 718 030 B1**

(12) **EUROPEAN PATENT SPECIFICATION**

(45) Date of publication and mention
of the grant of the patent:
**13.01.2010 Bulletin 2010/02**

(51) Int Cl.:
***H04L 29/08*** *(2006.01)*

(21) Application number: **06007636.1**

(22) Date of filing: **12.04.2006**

(54) **System and method for managing user groups in presence systems**

System und Verfahren zur Verwaltung von Benutzergruppen in einem Anwesenheitssystem

Système et procédé pour la gestion des groupes d'utilisateur dans un système de présence

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.04.2005 US 118679**

(43) Date of publication of application:
**02.11.2006 Bulletin 2006/44**

(73) Proprietor: **Alcatel Lucent**
**75008 Paris (FR)**

(72) Inventors:
 • **Wu, Fuming**
 **Frisco, TX 75035 (US)**
 • **Jachner, Jack**
 **Lexington, MA 02420 (US)**

(74) Representative: **Schmidt, Werner Karl**
**Alcatel-Lucent**
**Intellectual Property & Corporate Standards**
**70430 Stuttgart (DE)**

(56) References cited:
**EP-A- 1 549 013          WO-A-02/063486**
**US-A1- 2003 065 788**

 • **HISHAM KHARTABIL MIKKO LONNFORS JOSE COSTA-REQUENA EVA LEPPANEN NOKIA: "Event Notification Filtering for Presence draft-khartabil-simple-pres ence-filter-00.txt; draft-khartabil-simple-presence-filter-00. txt" IETF STANDARD-WORKING-DRAFT, INTERNET ENGINEERING TASK FORCE, IETF, CH, January 2002 (2002-01), XP015003929 ISSN: 0000-0004**

**Description**

**BACKGROUND OF THE INVENTION**

Technical Field of the Invention

The present invention relates in general to a presence-based interactive communications system, and in particular, to managing user groups in presence systems.

Description of Related Art

The phrase "real-time communication" is used to describe the ability of a user (or group of users) to communicate in real-time with another user (or group of users). Examples of real-time communications are "Click-to-Talk" for real-time voice, "Click-to-Text" for real-time text, "Click-to-MM" for real-time multi-media (video+) and "Click-to-Conferencing" for real-time conferencing with a particular real-time media type (e.g., voice, text or multi-media). Real-time communication is widely employed in enterprise communication environments to facilitate discussions between members (employees) of various enterprise groups. Examples of enterprise groups include technology research groups, product development groups, marketing groups, IT groups, customer service groups, legal groups and other similar groups.

Real-time communication is currently supported by a presence-based interactive communication service that enable callees (presentities) to publish, in real time, their presence information (such as, the availability, activity, local time, location, current status of the active devices/applications, etc.) to callers (presence watchers). The presence service further enables both presentities to specify their preference information (e.g., device preferences and privacy filters) and presence watchers to specify their preference information (e.g., watcher filters for receiving presentity presence information). The presence and preference information improves the efficiency of establishing real-time voice, text and multi-media communication sessions.

Presence systems typically incorporate a presence server to manage the presence for a plurality of presentities. Presence servers automatically receive updated presence information from various presence sources, such as calendar/scheduler applications, telephone applications or instant messaging applications. The presence server collects this presence information from the presence sources, and aggregates the presence information to reflect the presence status of the presentities, which can then be provided to watchers of the presentities to assist the watchers in establishing real-time communication sessions with the presentities.

Presence servers are further able to maintain the preference information for each of the presentities and watchers. The watcher preference information typically includes one or more watcher filters specified by the watcher at the time a watcher subscribes to the presence information of a presentity. The watcher filters are used by the presence server to filter the presentity presence information provided to the watcher. For example, a watcher may want to limit the presence information of a presentity to reduce the amount of presence information that the watcher receives or to focus the received presence information on a specific type of presence information (e.g., current presence status of a presentity in one or more media types).

In addition, the presentity preference information typically includes one or more presentity privacy filters that filter the presentity presence information provided to one or more watchers of the presentity. For example, a presentity may want to limit the presence information provided to certain watchers depending upon the importance of the watcher to the presentity or the category of the watcher.

As an example, if the presentity is an employee of an enterprise working within an enterprise group, the presentity may want to allow the presentity's boss to view all of the presentity's presence information, while limiting the scope of presence information viewable by other members of the presentity's enterprise group. However, in order to set the employee presentity's preference information as such, the employee presentity must separately authorize the scope of presence information provided to each individual watcher. Thus, even if the employee presentity desires to authorize the same scope of presence information to all members of the employee's enterprise group, current presence systems do not allow a presentity to provide group preference information for a group of watchers.

Moreover, if a new employee joins the employee presentity's enterprise group, the employee presentity has to access the presence system and manually enter the presentity's preference information for the new employee watcher, even if the preference information is the same as for all other members of the enterprise group. Similarly, if the employee presentity's enterprise group includes one or more users (employees or contractors) who are not registered watchers of the employee presentity, those unregistered users are not able to view the employee presentity's presence information even though the presentity may want to provide it to the unregistered users.

Likewise, if a manager of an enterprise group wants to view the presence information of all members of the enterprise group, the manager (as a watcher) must individually subscribe to the presence information of each of the members of the enterprise group. For example, if the manager wants to find out the status of a project being handled by one or more members of the enterprise group, the manager must separately view the presence information for each group member to identify which member is currently available for the communication. As another example, if an employee of an enterprise is having technical difficulties that require the attention of an IT group member, the employee (as a watcher) must individually view the presence information of each IT group member to identify a member with a specific skill set that is currently available.

In a similar manner, if a presentity wants to provide presence information to a group of watchers, but each watcher does not want to receive the same type of presence information, each watcher must individually specify the watcher filters for the presentity presence information.

For example, if a watcher subscribes to the presence information of a presentity, but either is not familiar with the various watcher filters available or does not have the time to enter watcher filters, the watcher may receive more presence information than necessary, which undesirably consumes excessive bandwidth resources and reduces the productivity of the watcher.

Therefore, what is needed is a presence system capable of managing user groups.

International Patent Application WO 02/063486 A1 relates to a method and device of displaying contact information of a plurality of individuals for a subscriber of the contact information. According to one embodiment, the method includes, for each individual, receiving current profile including one or more addresses of the individual for each communication network for which the individual is available to the subscriber. The method also includes, for each individual, generating a single summary indicator that identifies the individual and summarizes whether the individual is capable of receiving certain data content types, whether the individual is available on certain network types or device types, and/or whether certain groups of people are available. In addition, the method includes displaying the single summary indicator for each individual to the subscriber.

## SUMMARY OF THE INVENTION

Embodiments of the present invention provide a presence system and a method for managing user groups as disclosed in claim 1 and claim 8, respectively. The presence system includes a presence server for collecting and storing presence information on a plurality of presentities and preference information on a plurality of presentities (e.g., privacy filters) and watchers (e.g., watcher filters). The presence information for each presentity identifies the availability of the presentity, and the preference information identifies a scope of presentity presence information provided to one or more watchers of the presentity. The presence server is capable of subscribing user groups formed of members including one or more presentities or one or more watchers, in which each of the user groups has group preference information associated therewith set in response to one or more members of the user group.

In one embodiment, one of the user groups is a presentity group formed of one or more presentities. The group preference information for the presentity group defines an authorized scope of presence information of the presentities in the presentity group that is provided to a select one of the watchers. In an exemplary embodiment, the group preference information for the presentity group is set as common preference information between each of the presentities in the presentity group.

In another embodiment, one of the user groups is a watcher group for a select one of the presentities. The watcher group is formed of one or more watchers of the select presentity. The group preference information for the watcher group defines a scope of presence information of the select presentity authorized by the presentity and desired by the watchers that is provided to the watchers in the watcher group. In an exemplary embodiment, the group preference information for the watcher group is set as common presentity and watcher preference information between each of the watchers in the watcher group.

## BRIEF DESCRIPTION OF THE DRAWINGS

A more complete understanding of the present invention may be obtained by reference to the following detailed description when taken in conjunction with the accompanying drawings wherein:

FIGURE 1 illustrates an exemplary presence system in accordance with embodiments of the present invention;
FIGURE 2 illustrates an exemplary presence server for managing user groups, in accordance with embodiments of the present invention;
FIGURE 3 illustrates exemplary common group preference information for a presentity group, in accordance with embodiments of the present invention;
FIGURE 4 illustrates exemplary common group preference information for a watcher group, in accordance with embodiments of the present invention;
FIGURE 5 illustrates an exemplary preference data structure including watcher preferences for a presentity, in accordance with embodiments of the present invention;

FIGURE 6 illustrates an exemplary model for computing unified privacy filtering rules for presentity groups, in accordance with embodiments of the present invention;

FIGURE 7 illustrates an exemplary model for computing unified watcher filtering rules for watcher groups, in accordance with embodiments of the present invention;

FIGURE 8 is a flowchart illustrating an exemplary process for managing user groups in a presence system, in accordance with embodiments of the present invention;

FIGURE 9 is a flowchart illustrating an exemplary process for managing watcher groups in a presence system, in accordance with embodiments of the present invention; and

FIGURE 10 is a flowchart illustrating an exemplary process for managing presentity groups in a presence system, in accordance with embodiments of the present invention.

## DETAILED DESCRIPTION OF THE DRAWINGS

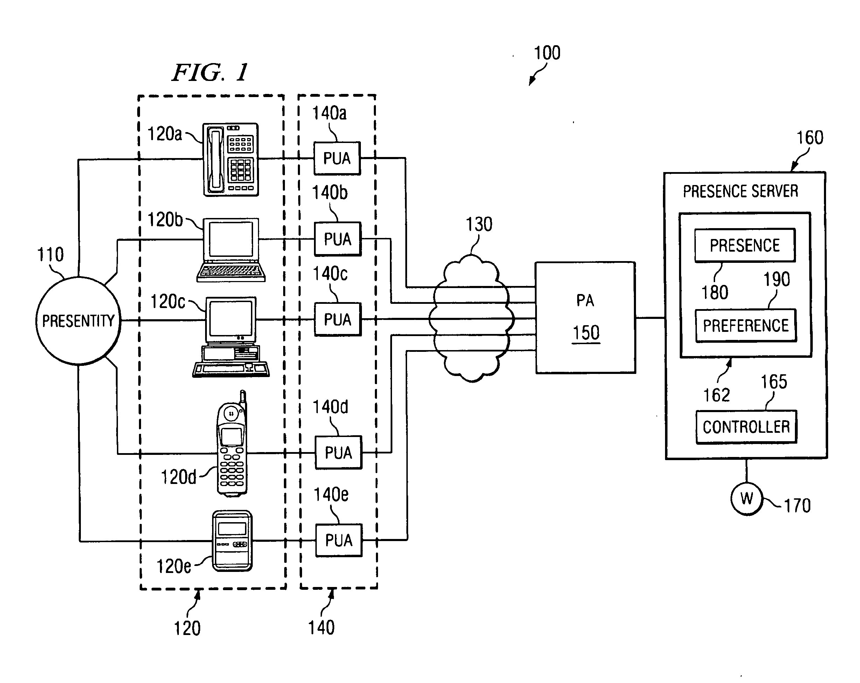

Referring to FIGURE 1, there is illustrated an exemplary presence system 100 capable of implementing various embodiments of the present invention. The presence system 100 includes a presentity 110 and one or more devices 120 associated with the presentity 110. The presentity 110 represents the callee and provides presence information on the callee's presence status to the presence system 100. Each device 120 is a physical communications device capable of sending and/or receiving communications over a communications network 130. Examples of such devices 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110. In FIGURE 1, a separate PUA 140 is shown for each device 120. However, it should be understood that in other embodiments, the number of PUAs 140 can vary based on the number and type of devices 120, the applications supported by the devices 120 and the system configuration. Each PUA 140 independently generates a component of the overall presence information for a presentity 110. Typically, PUA's 140 generate presence information when a change in presence status occurs. Examples of changes in presence status include, but are not limited to, turning on and off a device 120, modifying the registration from a device 120 and changing the instant messaging status on a device 120.

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110. In addition, the PA 150 collects presence information from other sources, such as a calendar/scheduler application (e.g., Microsoft Exchange Server®, IBM Lotus Notes® or other similar application) and an instant messaging application. The PA 150 aggregates the presence information from each of the sources and maintains the current complete presence information 180 for the presentity 110. The PA 150 further provides the presence information 180 to one or more watchers 170 (callers or communication session initiators) of the presentity 110.

The presence server 160 is a physical entity that can operate as either the PA 150 or as a proxy server for routing requests from watchers 170 to the PA 150. Thus, the PA 150, in combination with the presence server 160, is operable to receive presence information of the presentity 110 from the PUAs 140, receive requests from watchers 170 for the presence information and provide the presence information 180 to the watcher(s) 170. When acting as a PA 150, the presence server 160 can also be co-located with a PUA 140.

The presence server 160 includes a storage medium 162 and a controller 165. The storage medium 162 stores presence information 180 and preference information 190 for a plurality of presentities 110 of the presence system 100. The preference information 190 for a particular presentity 110 includes both presentity preference information (e.g., privacy filters) set by the presentity 110 for each watcher 170 and watcher preference information (e.g., watcher filters) set by each watcher 170 for the presentity 110.

The controller 165 is operable to configure, store and update the presence information 180 and preference information 190 in the storage medium 162. For example, in accordance with embodiments of the present invention, the controller 165 is operable to establish user groups, such as presentity groups of one or more presentities and watcher groups of one or more watchers, receive and/or set the preference information 190 for the user groups and store the user group preference information 190 in the storage medium 162.

As used herein, the term "controller" means any device, system or part thereof that controls at least one operation, which can be implemented in hardware, software, firmware, or some combination of the above. It should be noted that the functionality associated with the controller may be centralized or distributed, whether locally or remotely. For example, the controller may be a processor device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein. Furthermore, as used herein, the term "storage medium" means any device capable of storing data. By way of example, but not limitation, the storage medium can include one or more of random access memory (RAM), flash memory, or any other type of data storage device.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

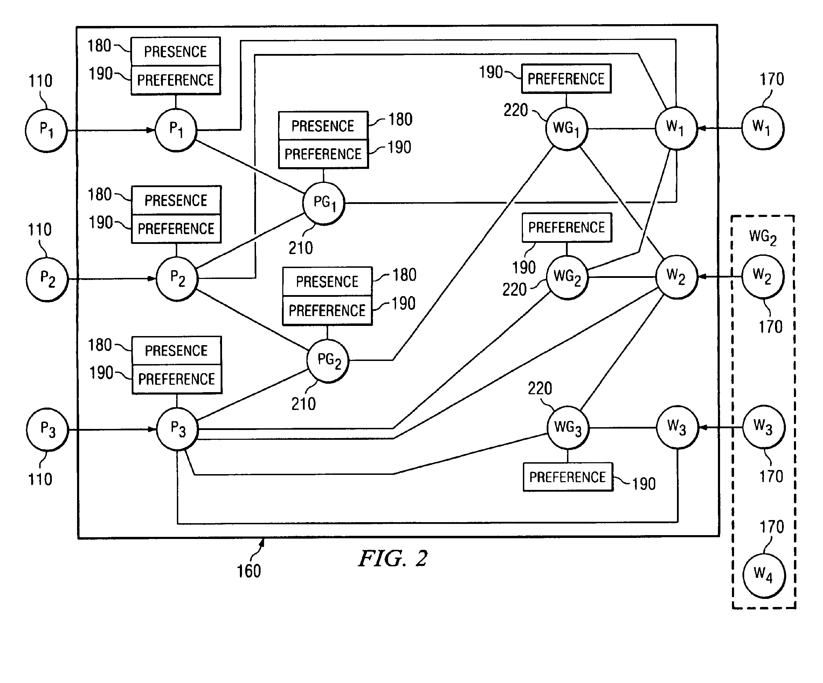

Referring now to FIGURE 2, there is illustrated an exemplary presence server 160 for managing user groups in accordance with embodiments of the present invention. As described above, the presence server 160 is configured to determine presence information 180 and preference information 190 for a plurality of presentities 110. The presence server 160 further provides the presence information 180 of the presentities 110 to one or more watchers 170 of the presentities 110.

For simplicity, only three presentities 110 (P1, P2 and P3) and four watchers 170 (W1, W2, W3 and W4) are shown in FIGURE 2. Each presentity P1, P2 and P3 is shown logically represented in the presence server 160 with associated presence information 180 and preference information 190. In addition, three of the watchers W1, W2 and W3 are shown logically represented in the presence server 160. Watcher W4 represents a user who is not a registered user of the presence services, and therefore, not a watcher of any of the presentities P1, P2 or P3.

In FIGURE 2, W1 is a watcher of P1 and P2, while W2 and W3 are watchers of P3. Thus, W1 has subscribed to receive the presence information 180 of P1 and P2 based on the respective preference information 190 associated with P1 and P2 (i.e., the presentity preference information set by P1 and P2 for W1 and the watcher preference information set by W1 for P1 and P2). For example, the preference information 190 associated with P1 may limit the scope of P1's presence information 180 provided to W1. Likewise, W2 and W3 have each separately subscribed to receive the presence information 180 of P3 based on the individual preference information 190 associated with P3 (e.g., presentity preference information set by P3 for W2 and W3 and watcher preference information set by W2 for P3 and W3 for P3).

The presence server 160 is further configured to establish one or more user groups. Each user group is formed of members including one or more presentities 110 or one or more watchers 170. In FIGURE 2, two types of user groups are shown: presentity groups 210 (e.g., PG1 and PG2) and watcher groups 220 (e.g., WG1, WG2 and WG3). A presentity group 210 includes one or more presentities 110, all of which are watched by one or more watchers 170 or watcher groups 220. A watcher group 220 includes one or more watchers 170 of a particular presentity 110 or presentity group 210.

In FIGURE 2, presentity groups PG1 and PG2 and watcher groups WG1, WG2 and WG3 are shown logically represented in the presence server 160. Presentities P1 and P2 together form presentity group PG1, while presentities P2 and P3 together form presentity group PG2. Each presentity group PG1 and PG2 has group presence information 180 and group preference information 190 associated therewith. The group presence information 180 for presentity group PG1 integrates the individual presence information 180 for presentity P1 with the individual presence information for P2, and similarly for presentity group PG2. For example, the presence information 180 for PG1 includes the presence status of P1 and the presence status of P2.

In one embodiment, the presence status of a presentity 110 includes the media status (INACTIVE, ACTIVE, IN USE or BUSY) and availability (AVAILABLE or UNAVAILABLE) of the presentity 110 in one or more media types (e.g., text, voice or multi-media). For each media type, INACTIVE signifies that the user/presentity is not ready to process communication sessions with this specific media type. For example, the INACTIVE state applies when the presentity 110 is not logged onto the network using any device capable of supporting that specific media type. The ACTIVE state indicates that the user/presentity 110 is ready to process communication sessions with this specific media type. For example, the ACTIVE state applies when the presentity 110 is logged onto the network using one or more devices capable of supporting that specific media type.

For each media type, the IN USE state informs the watchers 170 that the presentity 110 is involved in one or more communication sessions using this specific media type. However, the presentity 110 is still capable of processing additional communication sessions with the same media type. For each media type, the BUSY state indicates that the presentity 110 is currently engaged in communication sessions using the specific media type, and is not capable of engaging in any additional communication sessions with the same media type. For example, the BUSY state might be caused by limitations of resources (e.g., communication channels), or by limitations of the presentity's capability (e.g., the presentity is currently involved in the maximum number of communication sessions that the presentity can handle for the specific media type).

Thus, the group presence information 180 for presentity group PG1 integrates the presence status of P1 in one or more media types with the presence status of P2 in one or more media types, depending on the group preference information 190. Likewise, the group presence information 180 for presentity group PG2 integrates the presence status of P2 in one or more media types with the presence status of P3 in one or more media types, depending on the group preference information 190.

For example, in FIGURE 2, watcher W1 is a watcher of presentity group PG1. Therefore, the presence server 160 provides W1 with the group presence information of PG1 (e.g., the integration of presence status of P1 and the presence status of P2) based on the group preference information 190 associated with the presentity group PG1. As mentioned above, watcher W1 is a watcher of both presentity P1 and presentity P2, individually. Therefore, in one embodiment, the preference information 190 for presentity group PG1 includes common preference information 190 between presentities P1 and P2. The common preference information 190 includes both presentity privacy filters set by the presentities P1 and P2 for the watcher W1 and watcher filters set by the watcher W1 for the presentities P1 and P2.

For example, in presentity P1's preference information 190, presentity P1 may have set its privacy filters to limit the scope of presence information 180 provided to W1 to only P1's text presence status, while in presentity P2's preference information 190, presentity P2 may have set its privacy filters to allow W1 to view P2's presence status in each media type. When P1 and P2 are combined to form presentity group PG1, to prevent W1 from viewing any individual presentity presence information 180 not previously granted to W1 by one or more of the presentities P1 and P2 in the group, the group preference information 190 for PG1 includes only those parts of the individual privacy filters that are the same between P1 and P2. Using the above example, the presentity privacy filters of the group preference information 190 for presentity group PG1 is set to allow W1 to view only the integrated text presence status of both P1 and P2.

As another example, in presentity P1's preference information 190, W1 may have limited the scope of presence information 180 provided to W1 to only P1's text presence status, while in presentity P2's preference information 190, W1 may have requested to view P2's presence status in each media type. When P1 and P2 are combined to form presentity group PG1, to ensure that W1 does not unnecessarily receive any individual presentity presence information 180 not desired by W1, the group preference information 190 for PG1 includes only those parts of the individual watcher filters that are the same between P1 and P2. Using the above example, the watcher filters of the group preference information 190 for presentity group PG1 is set to allow W1 to view only the text presence status of both P1 and P2.

In another embodiment, the privacy filters in the group preference information 190 for presentity group PG1 can be manually set by a representative of the presentity group PG1 (e.g., P1 or P2), optionally with approval from other members of the presentity group PG1. In a further embodiment, watcher W1 can manually set the watcher filters in the group preference information 190 for presentity group PG1. In another embodiment, watcher W1 can request privacy filters for presentity group PG1, and upon approval by one or more members of presentity group PG1 or an administrator of the presence system, the group preference information 190 for presentity group PG1 can include the requested privacy filters. In still a further embodiment, the group preference information 190 for presentity group PG1 can be set to include all preference information 190 from each presentity P1 and P2 (e.g., the sum of P1 and P2's preference information for one or both of privacy filters and watcher filters).

A presentity group 210 can be established by a watcher 170 or watcher group, by one or more presentities 110 of the presentity group 210 or by an administrator of the presence system. For example, if W1 is a manager of an enterprise group, W1 or an administrator of the enterprise communications, can establish a presentity group 210 (e.g., PG1) that includes all of the members of the enterprise group. The manager can subscribe to the presentity group PG1 to view the presence information 180 of all of the members of the enterprise group. In addition, another watcher (e.g., a customer of the enterprise group, not specifically shown) can also subscribe to the presentity group PG1 to view the presence information 180 of the members of the enterprise group. However, the group preference information 190 of PG1 can differ for each watcher (e.g., W1 and the customer watcher). For example, the preference information 190 of PG1 can be set to allow W1 to view the presence status in each media type for all of the presentities P1 and P2 in the group PG1, and to allow the customer to view the presence status of only the voice media type for all of the presentities P1 and P2 in the group PG1 based on the privacy filters and watcher filters of the group preference information 190. Again, this preference information 190 can be set manually or based on the common individual preference information between P1 and P2 for each watcher.

Referring now to the watcher groups WG1, WG2 and WG3, watchers W1 and W2 together form watcher group WG1. Watcher group WG1 is a watcher of presentity group PG1 formed of presentities P1 and P2. In addition, watchers W1 and W2 also together form watcher group WG2. Watcher group WG2 is a watcher of presentity P3. Furthermore, watchers W2, W3 and W4 together form watcher group WG3. Watcher group WG3 is also a watcher of presentity P3. As described above, watcher W4 represents a user who has not subscribed to the individual presence information 180 of any of the presentities P1, P2 or P3. For example, watcher W4 may be a new employee, contractor or customer of an enterprise who presentity P3 wants to provide presence information to, but who has not yet subscribed to the presence information of P3.

Each watcher group WG1, WG2 and WG3 has group preference information 190 associated therewith. The watcher group preference information 190 is shown in FIGURE 2 as being logically associated with each watcher group. However, since the watcher group preference information is associated with a particular presentity or presentity group, the watcher group preference information is preferably stored with the preference information 190 of that presentity or presentity group.

For example, as mentioned above, watchers W2 and W3 are both watchers of presentity P3, and therefore, in the individual preference information 190 for P3, presentity P3 may have set different privacy filters for each watcher W2 and W3. In addition, in the individual preference information 190 for P3, each watcher W2 and W3 may have set different watcher filters. As a result, in one embodiment, the preference information 190 for watcher group WG3 includes common preference information 190 of presentity P3 for watchers W2 and W3.

For example, in presentity P3's preference information 190, presentity P3 may have set its privacy filters to limit the scope of presence information 180 provided to W2 to only P3's text presence status, while allowing W3 to view P3's presence status in each media type. When W2 and W3 are combined to form watcher group WG1, to prevent W2 from viewing any individual presentity presence information 180 not previously granted to W2 by presentity P3, the group preference information 190 for WG3 includes only those parts of presentity P3's preference information that are the same between W2 and W3. Using the above example, the privacy filters of the group preference information 190 for watcher group WG3 (including only W2 and W3) is set to allow W2 and W3 to view only the text presence status of P3.

As another example, in presentity P3's preference information 190, watcher W2 may have set its watcher filters to limit the scope of presence information 180 provided to W2 to only P3's text presence status, while watcher W3 may have set its watcher filters to allow W3 to view P3's presence status in each media type. When W2 and W3 are combined to form watcher group WG1, to unnecessarily burden W2 with excess presentity presence information, the group preference information 190 for WG3 includes only those parts of presentity P3's watcher filters that are the same between W2 and W3. Using the above example, the watcher filters of the group preference information 190 for watcher group WG3 (including only W2 and W3) is set to allow W2 and W3 to view only the text presence status of P3.

However, watcher group WG3 also includes W4, who is not a watcher of P3, and therefore, P3 does not have any individual preference information 190 for W4. In one embodiment, including W4 in the watcher group WG3 does not affect the group preference information 190 for watcher group WG3 (e.g., preference information for W4 is treated as in common with the preference information of all other watchers in the group). Thus, the group preference information 190 for watcher group WG3 is still set as the common preference information between W2 and W3 set by P3. In another embodiment, to prevent W4 from viewing P3's presence information 180 not specifically granted to W4 by P3, the group preference information 190 for WG3 can be set to a default preference setting, as established by presentity P3 or the presence system administrator.

In another embodiment, the privacy filters of the group preference information 190 for watcher group WG3 can be manually set by the presentity P3. In addition, the watcher filters of the group preference information 190 for the watcher group WG3 can be manually set by a representative watcher of the watcher group WG3, optionally with approval from the other members of the watcher group WG3. In a further embodiment, watcher W2 or W3 can request privacy filters for watcher group WG3, and upon approval by presentity P3 or an administrator of the presence system, the group preference information 190 for watcher group WG3 can include the requested privacy filters.

A watcher group 220 can be established by a presentity 110 or a presentity group 210, by one or more watchers 170 of the watcher group 220 or by an administrator of the presence system. For example, if presentity P3 is a member of an enterprise group, and watchers W2, W3 and W4 are also members of that enterprise group, P3 can establish a watcher group WG3 including watchers W2, W3 and W4 to enable all of the watchers W2, W3 and W4 to view the same presence information 180 of the presentity P3 without requiring the presentity P3 to separately authorize the scope of presence information provided to each individual watcher.

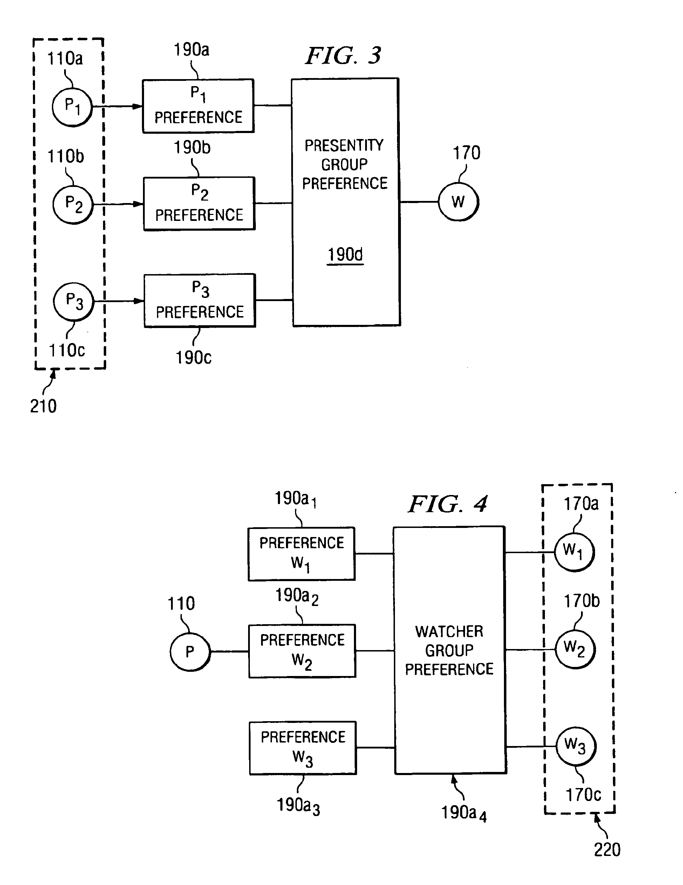

FIGURE 3 illustrates exemplary common group preference information for a presentity group, in accordance with embodiments of the present invention. In FIGURE 3, presentities 110a (P1), 110b (P2) and 110c (P3) form a presentity group 210. Each presentity 110a, 110b and 110c has individual preference information 190a, 190b and 190c (e.g., privacy filters and watcher filters) for a particular watcher 170. When presentities 110a, 110b and 110c are combined to form the presentity group 210, the group preference information 190d for the presentity group 210 includes only those parts of the individual preference information 190a, 190b and 190c that are the same.

FIGURE 4 illustrates exemplary common group preference information for a watcher group, in accordance with embodiments of the present invention. In FIGURE 4, watchers 170a (W1), 170b (W2) and 170c (W3) form a watcher group 220 for watching a presentity 110. The presentity 110 has respective preference information $190a_1$, $190a_2$ and $190a_3$ (e.g., privacy filters and watcher filters) associated with each watcher 170a, 170b and 170c. When watchers 170a, 170b and 170c are combined to form the watcher group 220, the group preference information $190a_4$ for the watcher group 220 includes only those parts of the individual preference information $190a_1$, $190a_2$ and $190a_3$ that are the same.

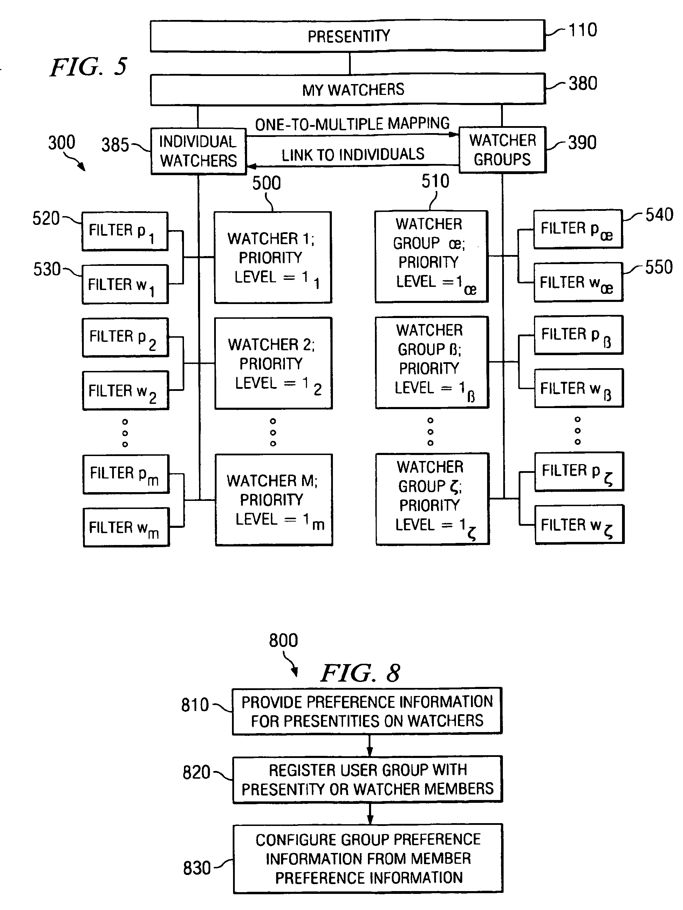

FIGURE 5 illustrates an exemplary preference data structure 300 for storing presentity (or presentity group) preference information 190, in accordance with embodiments of the present invention. For each presentity 110 (or presentity group 210), the presence server can store presentity preference information relating to watchers 380. Under watcher preferences 380, the presentity 110 can enter individual watcher preferences 385 and watcher group preferences 390. An individual watcher 170 refers to an individual session initiator, while a watcher group 220 refers to one or more session initiators belonging to a group. For example, the "Accounting Department" may be a watcher group, even if the group only has a single watcher. An individual watcher can also be included in multiple watcher groups. The members of a watcher group can be linked to their individual watcher records to avoid the redundancy and maintain the consistency of watcher information.

One specific type of watcher preference for individual watchers is a priority level 500. For each watcher that subscribes to the presentity's presence information, the presentity can enter a priority level 500 for that watcher. In addition, the presentity can establish a default priority level for all watchers not granted a specific priority level and other users who are not watchers of the presentity. In addition, each watcher group can be granted a particular priority level 510 by the presentity. For example, the presentity 110 can grant everyone in his department (watcher group) a specific priority, but also grant his or her boss (individual watcher) a higher priority than the watcher group.

The watcher group priority level 510 can be configured by the presentity, or, alternatively, determined from the priority levels granted to the individual watchers in the watcher group. For example, in one embodiment, the watcher group priority level 510 can be the lowest priority level granted to the individual watchers in the group. In another embodiment, the watcher group priority level 510 can be the highest priority level granted the individual watchers in the group. In a further embodiment, the watcher priority level 510 can be the average of the priority levels granted to the individual watchers in the group.

In addition, a presentity can enter filtering rules 520 per watcher, and a watcher can also enter filtering rules 530 per presentity. The presentity filtering rules 520 per watcher are set by the presentity and can be used to authorize the scope of the presentity's presence information that is disclosed to the watcher (i.e., privacy filters) based on the priority level 500 granted to the watcher. The watcher filtering rules 530 per presentity are set by the watcher and can be used to filter the presentity presence information provided to the watcher. Furthermore, the group priority level 510 granted by the presentity to each watcher group 390 can be linked to presentity filtering rules 540 for the watcher group and watcher group filtering rules 550 for the watcher group. For example, a presentity 110 (presentity group) can specify the type and amount of the presentity's presence information that is disclosed to a watcher or watcher group.

The watcher group's filtering rules 550 can be configured by a representative of the group, or alternatively, can include default filtering rules determined from the union of all the filtering rules of its members who are already watchers of the presentity. In addition, a presentity can configure his or her filtering rules 540 for each watcher group, or, alternatively, the presentity's filtering rules 540 for a watcher group can include default filtering rules determined from the intersection of all the filtering rules the presentity has already configured for the members who are the presentity's watchers.

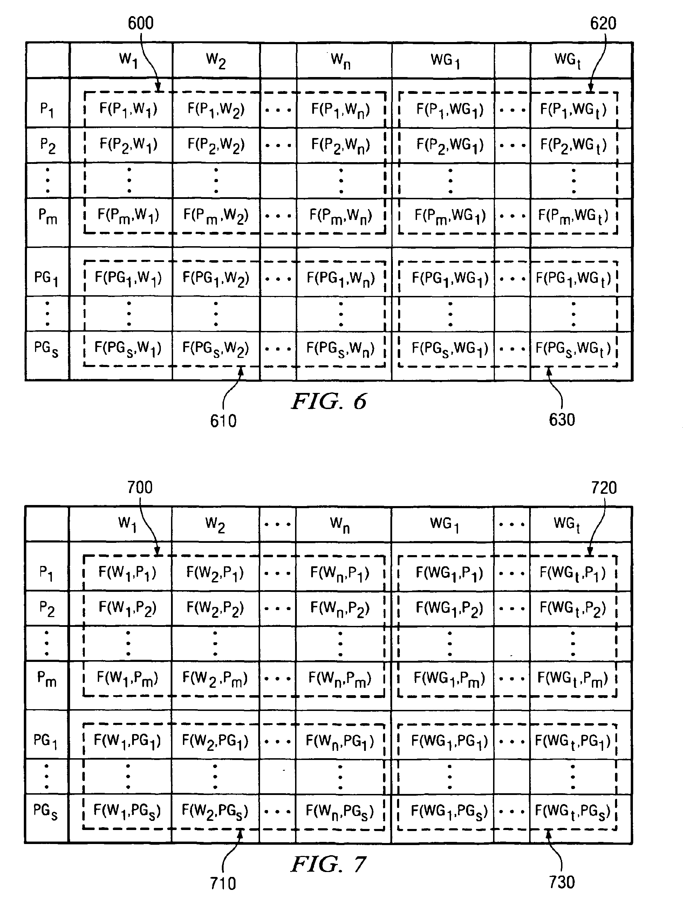

FIGURE 6 illustrates an exemplary model for computing unified presentity filtering rules for user groups, in accordance with embodiments of the present invention. As mentioned above, at the time a watcher subscribes to the presence information of a presentity group, the presentity group representative may authorize the watcher a fixed scope of presence access, or, simply authorize the watcher the 'default' access scope. To compute the default presentity filtering rules for a user group, it is assumed that a presentity group (PG) is formed of presentities (P) as follows:

$$PG_i = \{P_{i_1}, P_{i_2}, \ldots P_{i_{a_i}}\} \; (i = 1, \ldots, s),$$

and a watcher group (*WG*) is formed of watchers (*W*) as follows:

$$WG_j = \{W_{j_1}, W_{j_2}, \ldots W_{j_{\beta_j}}\} \; (j = 1, \ldots, t).$$

The individual presentity filtering rules of each presentity for each watcher is shown in the section, labeled 500, of Figure 5. Thus, section 500 includes the presentity filtering rules set by presentity $P_1$ for watchers $W_1, W_2, ...W_n$, the presentity filtering rules set by presentity $P_2$ for watchers $W_1, W_2, ...W_n$ and the presentity filtering rules set by presentity $P_m$ for watchers $W_1, W_2, ...W_n$.

In one embodiment, the presentity filtering rules for each presentity are in XML document format, and the unified presentity filtering rules for each user group is computed as the common part of the XML documents. For example, as shown in FIGURE 5, the unified presentity filtering rules of each presentity group ($PG$) for each watcher ($W$), as shown in section 610, can be computed as:

$$F(PG_i, W_k) = \wedge_{l=1}^{\alpha_i} F(P_{i_l}, W_k), \text{ for } \forall i=1, ..., s \text{ and } \forall k=1, ..., n,$$

where the symbol $\Lambda$ represents the joint operation of XML documents, i.e., $D_1 \Lambda D_2$ represents the common part documents $D_1$ and $D_2$.

In addition, the unified presentity filtering rules of each presentity (P) for each watcher group (WG), as shown in section 620, can be computed as:

$$F(P_k, WG_j) = \wedge_{l=1}^{\beta_j} F(P_k, W_{j_l}), \text{ for } \forall j=1, ..., t \text{ and } \forall k=1, ..., m.$$

Finally, the unified presentity filtering rules of each presentity group ($PG$) for each watcher group ($WG$), as shown in section 630, can be computed as:

$$F(PG_i, WG_j) = \wedge_{l=1}^{\beta_j} F(PG_i, W_{j_l}), \text{ for } \forall i=1, ..., s \text{ and } \forall j=1, ..., t.$$

The above computations are performed at the time of a watcher or a watchers group subscribes to the presentity or presentity groups. The computations are re-performed when a presentity or a presentity group changes its presentity filtering rules for a watcher or a watcher group.

FIGURE 7 illustrates an exemplary model for computing unified watcher filtering rules for user groups, in accordance with embodiments of the present invention. As mentioned above, at the time a watcher or a watcher group subscribes to a presentity or a presentity group, the watcher or watcher group representative might clearly specify the watcher filtering requirements of the watcher or the watcher group filtering requirements of the watcher group on behalf of the group members, or, simply use 'default' watcher filtering rules. To compute the default watcher filtering rules for a user group, it is again assumed that a presentity group ($PG$) is formed of presentities ($P$) as follows:

$$PG_i = \{P_{i_1}, P_{i_2}, ...P_{i_{\alpha_i}}\} (i = 1, ..., s),$$

and a watcher group ($WG$) is formed of watchers ($W$) as follows:

$$WG_j = \{W_{j_1}, W_{j_2}, ...W_{j_{\beta_j}}\} (j = 1, ..., t).$$

The individual watcher filtering rules of each presentity for each watcher is shown in the section, labeled 700, of Figure 7. Thus, section 700 includes the watcher filtering rules of watcher $W_1$ for presentities $P_1, P_2, ...P_m$, the watcher filtering rules of watcher $W_2$ for presentities $P_1, P_2, ...P_m$ and the watcher filtering rules of watcher $W_n$ for presentities $P_1, P_2, ...P_m$.

In one embodiment, the watcher filtering rules for each watcher are in XML document format, and the unified watcher filtering rules for each user group is computed as the common part of the XML documents. For example, as shown in FIGURE 5, the unified watcher filtering rules of each watcher ($W$) for each presentity group ($PG$), as shown in section 710, can be computed as:

$$F(W_k, PG_i) = \wedge_{l=1}^{\alpha_i} F(W_k, P_{i_l}), \qquad \text{for} \qquad \forall\, i = 1, \ldots, s$$

and

$$\forall\, k = 1, \ldots, n.$$

In addition, the unified watcher filtering rules of each watcher group (*WG*) for each presentity (*P*), as shown in section 720, can be computed as:

$$F(WG_j, P_k) = \wedge_{l=1}^{\beta_j} F(W_{j_l}, P_k), \qquad \text{for} \qquad \forall\, j = 1, \ldots, t$$

and

$$\forall\, k = 1, \ldots, m.$$

Finally, the unified watcher filtering rules of each watcher group (*WG*) for each presentity group (*PG*), as shown in section 730, can be computed as:

$$F(WG_j, PG_i) = \wedge_{l=1}^{\beta_j} F(W_{j_l}, PG_i), \qquad \text{for} \qquad \forall\, i = 1, \ldots, s$$

and

$$\forall\, j = 1, \ldots, t.$$

The above computations are performed at the time a watcher or a watcher group subscribes to the presentity or presentity group. The computations are re-performed when a watcher or a watcher group's watcher filtering rules change for a presentity or a presentity group.

FIGURE 8 is a flowchart illustrating an exemplary process 800 for managing user groups in a presence system, in accordance with embodiments of the present invention. Initially, at block 810, a presence system maintains presence information on a plurality of presentities, and also maintains preference information for each presentity associated with one or more watchers of the presentity. At block 820, a user group is registered to the presence system by the group owner or group representative. The user group is formed of members including one or more presentities or one or more watchers.

At block 830, from the individual preference information associated with the members of the user group, the group preference information for the user group is configured. For example, in one embodiment, the group preference information for the user group includes only those parts of the individual member preference information that are the same between the members. In another embodiment, the group preference information for the user group is manually set.

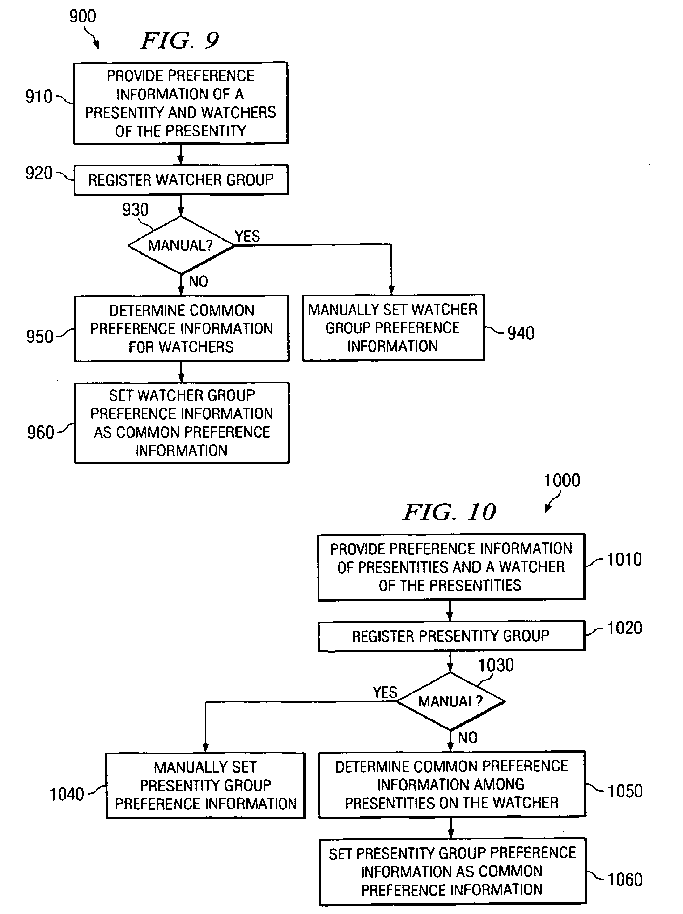

FIGURE 9 is a flowchart illustrating an exemplary process 900 for managing watcher groups in a presence system, in accordance with embodiments of the present invention. Initially, at block 910, a presence system maintains presence information on a presentity or presentity group, and also maintains both preference information for that presentity or presentity group associated with one or more watchers of the presentity or presentity group and preference information for the watchers of the presentity or presentity group. At block 920, a watcher group formed of one or more members (e.g., watchers of the presentity and other unregistered users) registers to the presence system and subscribes the presence information of the presentity or presentity group.

At block 930, if the presentity and/or representative of the watcher group wants to manually set the preference information (privacy filters and/or watcher filters) for the watcher group, at block 940, the presence system receives and stores manually set preference information for the watcher group. However, if the presently and/or watcher group wants to use the "default" preference information for the watcher group, at block 950, the presence system determines the common preference information (e.g., privacy filters and/or watcher filters) between the watchers in the watcher group, and at block 960, sets the group preference information for the watcher group to the common preference information.

FIGURE 10 is a flowchart illustrating an exemplary process 1000 for managing presently groups in a presence system, in accordance with embodiments of the present invention. Initially, at block 1010, a presence system maintains presence information on a plurality of presentities or presently groups, and also maintains both preference information for each presently or presently group on a particular watcher of the presentities or presently groups and preference information for the watcher of the presentities or presently groups. At block 1020, a presently group formed of one or more presentities or presently groups registers to the presence system.

At block 1030, if the presently group and/or watcher wants to manually set the preference information (e.g., privacy filters and/or watcher filters) for the watcher, at block 1040, the presence system receives and stores manually set preference information for the presently group. However, if the presently group and/or watcher wants to use the "default" preference information for the watcher, at block 1050, the presence system determines the common preference information among all of the presentities in the presently group for the watcher, and at block 1060, sets the group preference information for the presently group to the common preference information.

The following features, separately or in any combination, may also constitute advantageous embodiments of the described or claimed invention:

- The claimed and/or described presence system, wherein said group preference information for said user group is manually set;
- The claimed and/or described presence system, wherein said select watcher is a watcher group formed of one or more watchers of said presently group;
- The claimed and/or described presence system, wherein said group preference information includes common preference information between said respective preference information associated with said one or more watchers in said watcher group;
- The claimed and/or described presence system, wherein said select presently is a presently group formed of one or more presentities for said watcher group;
- The claimed and/or described presence system, wherein said watcher group includes at least one member not subscribed to said select presently;
- A presence server for managing user groups, comprising: a storage medium for storing presence information and preference information on a plurality of presentities, wherein said presence information for each of said presentities identifies availability of said respective presently and said preference information for each of said presentities identifies a scope of said respective presence information provided to one or more watchers of said respective presently; and a controller capable of subscribing user groups formed of members including one or more presentities or one or more watchers, each of said user groups having group preference information associated therewith set in response to one or more of said respective members in said respective user group;
- The claimed and/or described presence server, wherein one of said user groups is a presently group formed of one or more of said presentities, said group preference information for said presently group defining an authorized scope of said presence information of said one or more presentities in said presently group provided to a select one of said watchers;
- The claimed and/or described presence server, wherein said controller is operable to set said group preference information for said presently group as common preference information between each of said one or more presentities in said presently group;
- The claimed and/or described presence server, wherein one of said user groups is a watcher group for a select one of said presentities, said watcher group formed of one or more of said watchers, said group preference information for said watcher group defining a desired scope of said presence information of said select presently provided to said one or more watchers in said watcher group;
- The claimed and/or described presence server, wherein said controller is operable to set said group preference information for said watcher group as common preference information between said respective preference information associated with said one or more watchers in said watcher group;
- The claimed and/or described method, wherein said user group is a watcher group for a select one of said presentities, said watcher group formed of one or more of said watchers, said group preference information for said watcher group defining a desired scope of said presence information of said select presently provided to said one or more watchers in said watcher group, and wherein said step of setting further comprises the step of: setting said group preference information for said watcher group as common preference information between said respective preference information associated with said one or more watchers in said watcher group.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

**Claims**

1.   A presence system (100) for managing user groups, comprising:

   - a presence server (160) for collecting and storing presence information (180) and preference information (190) on a plurality of presentities (110), wherein said presence information (180) for each of said presentities identifies availability of said respective presentity and wherein said preference information (190) for each of said presentities identifies a scope of said respective presence information provided to one or more watchers (170) of said respective presentity (110);
   - wherein said presence server (160) is capable of subscribing user groups (210, 220) formed of members including one or more presentities (110) or one or more watchers (170); and
   - wherein each of said user groups (210, 220) has group preference information associated therewith, said group preference information defining a scope of said presence information (180) of said one or more presentities (110) in a user group, formed of members including one or more presentities (110), provided to a select one of said watchers (170), or a scope of said presence information (180) of a select presentity (110) provided to said one or more watchers (170) in a user group formed of members including one or more watchers (170);

   **characterized in that**

   - said group preference information for said user group (210, 220) is set based on said respective preference information (190) associated with said one or more members in said user group (210, 220).

2.   The presence system of Claim 1, wherein one of said user groups is a presentity group formed of one or more of said presentities, said group preference information for said presentity group defining a scope of said presence information of said one or more presentities in said presentity group provided to a select one of said watchers.

3.   The presence system of Claim 2, wherein said group preference information includes common preference information between each of said one or more presentities in said presentity group.

4.   The presence system of any one of Claims 1 to 3, wherein one of said user groups is a watcher group for a select one of said presentities, said watcher group formed of one or more of said watchers, said group preference information for said watcher group defining a scope of said presence information of said select presentity provided to said one or more watchers in said watcher group.

5.   The presence system of Claim 4, wherein said group preference information includes common preference information between said respective preference information associated with said one or more watchers in said watcher group.

6.   The presence system of any one of Claims 1 to 5, wherein said preference information for each of said presentities includes respective privacy filters defining an authorized scope of said respective presence information provided to one or more watchers of said respective presentity, and wherein said group preference information associated with each of said user groups, formed of members including one or more presentities (110), includes respective group privacy filters set based on said privacy filters associated with each of said members in said respective user group.

7.   The presence system of any one of Claims 1 to 6, wherein said presence server is further operable to collect and store preference information for a plurality of said watchers, and wherein said preference information for each of said watchers includes respective watcher filters defining a desired scope of said respective presence information of one or more of said presentities, and wherein said group preference information associated with each of said user groups, formed of members including one or more watchers (170), includes respective group watcher filters set based on said watcher filters associated with each of said members in said respective user group.

8.   A method for managing user groups in presence systems, comprising the steps of:

   - providing (810) presence information (180) and preference information (190) on a plurality of presentities (110), wherein said presence information (180) for each of said presentities identifies availability of said respective presentity and said preference information (190) for each of said presentities identifies a scope of said respective presence information provided to one or more watchers (170) of said respective presentity (110);

- subscribing (820) a user group (210, 220) formed of members including one or more presentities (110) or one or more watchers (170); and

- setting (830) group preference information for said user group (210, 220), said group preference information for said user group, formed of members including one or more presentities (110), defining an authorized scope of said presence information (180) of said one or more presentities in said user group provided to a select one of said watchers (170), or a desired scope of said presence information (180) of a select presentity (110) provided to said one or more watchers (170) in said user group formed of members including one or more watchers (170),

**characterized by**

- setting said group preference information for said user group (210, 220) based on said respective preference information (190) associated with said one or more members in said user group (210, 220).

**9.** The method of Claim 8, wherein said user group, formed of members including one or more presentities (110), is a presentity group formed of one or more of said presentities, said group preference information for said presentity group defining an authorized scope of said presence information of said one or more presentities in said presentity group provided to a select one of said watchers, and wherein said step of setting further comprises the step of:

setting said group preference information for said presentity group as common preference information between each of said one or more presentities in said presentity group.

**10.** The method of Claim 8, wherein said user group, formed of members including one or more watchers (170), is a watcher group for a select one of said presentities, said watcher group formed of one or more of said watchers, said group preference information for said watcher group defining a desired scope of said presence information of said select presentity provided to said one or more watchers in said watcher group, and wherein said step of setting further comprises the step of: setting said group preference information for said watcher group as common preference information between said respective preference information associated with said one or more watchers in said watcher group.

**Patentansprüche**

**1.** Ein Anwesenheitssystem (100) zur Verwaltung von Benutzergruppen, umfassend:

- Einen Präsenzserver (160) zum Erfassen und Speichern von Präsenzinformationen (180) und Präferenzinformationen (190) über eine Vielzahl von Presentities (110), wobei die besagten Präsenzinformationen (180) für eine jede der besagten Presentities die Verfügbarkeit der besagten jeweiligen Presentity identifizieren, und wobei die besagten Präferenzinformationen (190) für eine jede der besagten Presentities einen Umfang der besagten jeweiligen, an einen oder mehrere Wächter (170) der besagten jeweiligen Presentity (110) bereitgestellten Präsenzinformationen identifizieren;

- wobei der besagte Präsenzserver (160) fähig ist, Benutzergruppen (210, 220), welche aus Mitgliedern einschließlich einer oder mehrerer Presentities (110) oder eines oder mehrerer Wächter (170) bestehen, anzumelden; und

- wobei eine jede der besagten Benutzergruppen (210, 220) über mit ihr assoziierte Gruppenpräferenzinformationen verfügt, wobei die besagten Gruppenpräferenzinformationen einen Umfang der besagten an einen ausgewählten der besagten Wächter (170) bereitgestellten Präsenzinformationen (180) der besagten einen oder mehreren Presentities (110) in einer Benutzergruppe, welche aus Mitgliedern einschließlich einer oder mehrerer Presentities (110) besteht, oder einen Umfang der besagten an den besagten einen oder die besagten mehreren Wächter (170) bereitgestellten Präsenzinformationen (180) einer ausgewählten Presentity (110) in einer aus Mitgliedern einschließlich eines oder mehrerer Wächter (170) bestehenden Benutzergruppe definiert;

**dadurch gekennzeichnet, dass**

- die besagten Gruppenpräferenzinformationen für die besagte Benutzergruppe (210, 220) auf der Basis der besagten mit dem besagten einen Mitglied oder den besagten mehreren Mitgliedern in der besagten Benutzergruppe assoziierten jeweiligen Präferenzinformationen (190) eingestellt werden.

2. Das Anwesenheitssystem nach Anspruch 1, wobei eine der besagten Benutzergruppen eine aus einer oder mehreren der besagten Presentities bestehende Presentity-Gruppe ist, wobei die besagten Gruppenpräferenzinformationen für die besagte Presentity-Gruppe einen Umfang der besagten an einen ausgewählten der besagten Wächter bereitgestellten Präsenzinformationen der besagten einen oder mehreren Presentities in der Presentity-Gruppe definieren.

3. Das Anwesenheitssystem nach Anspruch 2, wobei die besagten Gruppenpräferenzinformationen für eine jede der besagten einen oder mehreren Presentities in der besagten Presentity-Gruppe gemeinsame Präferenzinformationen enthalten.

4. Das Anwesenheitssystem nach einem beliebigen der Ansprüche 1 bis 3, wobei eine der besagten Benutzergruppen eine Wächtergruppe für eine ausgewählte der besagten Presentities ist, wobei die besagte Wächtergruppe aus einem oder mehreren der besagten Wächter besteht, wobei die besagten Gruppenpräferenzinformationen für die besagte Wächtergruppe einen Umfang der besagten an den besagten einen oder die besagten mehreren Wächter in der besagten Wächtergruppe bereitgestellten Präsenzinformationen der besagten ausgewählten Presentity definieren.

5. Das Anwesenheitssystem nach Anspruch 4, wobei die besagten Gruppenpräferenzinformationen gemeinsame Präferenzinformationen zwischen den besagten jeweiligen mit dem besagten einen oder den besagten mehreren Wächtern in der besagten Wächtergruppe assoziierten Präferenzinformationen umfassen.

6. Das Anwesenheitssystem nach einem beliebigen der Ansprüche 1 bis 5, wobei die besagten Präferenzinformationen für eine jede der besagten Presentities jeweils Privacy-Filter umfassen, welche einen autorisierten Umfang der besagten jeweiligen an einen oder mehrere Wächter der besagten jeweiligen Presentity bereitgestellten Präsenzinformationen definieren, und wobei die besagten mit einer jeden der besagten, von Mitgliedern einschließlich einer oder mehrerer Presentities (110) gebildeten Benutzergruppen assoziierten Gruppenpräferenzinformationen jeweilige Gruppen-Privacy-Filter umfassen, welche auf der Basis der besagten mit einem jeden der besagten Mitglieder in der besagten jeweiligen Benutzergruppe assoziierten Privacy-Filter eingestellt werden.

7. Das Anwesenheitssystem nach einem beliebigen der Ansprüche 1 bis 6, wobei der besagte Präsenzserver weiterhin dazu ausgelegt ist, Präferenzinformationen für eine Vielzahl der besagten Wächter zu erfassen und zu speichern, und wobei die besagten Präferenzinformation für einen jeden der besagten Wächter jeweilige Wächterfilter umfassen, welche einen gewünschten Umfang der besagten jeweiligen Präzenzinformationen einer oder mehrerer der besagten Presentities definieren, und wobei die besagten mit einer jeden der besagten, von Mitgliedern einschließlich eines oder mehrerer Wächter (170) gebildeten Benutzergruppe assoziierten Gruppenpräferenzinformationen jeweilige Gruppenwächterfilter umfassen, welche auf der Basis der besagten mit einem jeden der besagten Mitglieder in der besagten jeweiligen Benutzergruppe assoziierten Wächterfilter eingestellt werden.

8. Ein Verfahren zur Verwaltung von Benutzergruppen in Anwesenheitssystemen, welches die folgenden Schritte umfasst:

Bereitstellen (810) von Präsenzinformationen (180) und Präferenzinformationen (190) über eine Vielzahl von Presentities (110), wobei die besagten Präsenzinformationen (180) für eine jede der besagten Presentities die Verfügbarkeit der besagten jeweiligen Presentity identifizieren, und wobei die besagten Präferenzinformationen (190) für eine jede der besagten Presentities einen Umfang der besagten jeweiligen, an einen oder mehrere Wächter (170) der besagten jeweiligen Presentity (110) bereitgestellten Präsenzinformationen identifizieren;
- Anmelden (820) eine Benutzergruppe (210, 220), welche aus Mitgliedern einschließlich einer oder mehrerer Presentities (110) oder eines oder mehrerer Wächter (170) besteht; und
- Einstellen (830) von Gruppenpräferenzinformationen für die besagte Benutzergruppe (210, 220), wobei die besagten Gruppenpräferenzinformationen für die besagte aus Mitgliedern einschließlich einer oder mehrerer Presentities (110) bestehende Benutzergruppe einen autorisierten Umfang der besagten an einen ausgewählten der besagten Wächter (170) bereitgestellten Präsenzinformationen (180) der besagten einen oder mehreren Presentities in der besagten Benutzergruppe, oder einen gewünschten Umfang der besagten an den besagten einen oder an die besagten mehreren Wächter (170) in der besagten von Mitgliedern einschließlich eines oder mehrerer Wächter (170) gebildeten Benutzergruppe bereitgestellten Präsenzinformationen (180) einer ausgewählten Presentity (110) definieren;

**gekennzeichnet durch**

- Einstellen der besagten Gruppenpräferenzinformationen für die besagte Benutzergruppe (210, 220) auf der Basis der besagten mit dem besagten einen oder den besagten mehreren Mitgliedern in der besagten Benutzergruppe (210, 220) assoziierten jeweiligen Präferenzinformationen (190).

**9.** Das Verfahren nach Anspruch 8, wobei die besagte von Mitgliedern einschließlich einer oder mehrerer Presentities (110) gebildete Benutzergruppe eine aus einer oder mehreren der besagten Presentities gebildete Presentity-Gruppe ist, wobei die besagten Gruppenpräferenzinformationen für die besagte Presentity-Gruppe einen autorisierten Umfang der besagten an einen ausgewählten der besagten Wächter bereitgestellten Präsenzinformationen der besagten einen oder mehreren Presentities in der besagten Presentity-Gruppe definieren, und wobei der besagte Schritt des Einstellens weiterhin den folgenden Schritt umfasst:

Einstellen der besagten Gruppenpräferenzinformationen für die besagte Presentity-Gruppe als gemeinsame Präferenzinformationen zwischen einer jeden der besagten einen oder mehreren Presentities in der besagten Presentity-Gruppe.

**10.** Das Verfahren nach Anspruch 8, wobei die besagte von Mitgliedern einschließlich eines oder mehrerer Wächter (170) gebildete Benutzergruppe eine Wächtergruppe für eine ausgewählte der besagten Presentities ist, wobei die besagte Wächtergruppe aus einem oder mehreren der besagten Wächter gebildet wird, wobei die besagten Gruppenpräferenzinformationen für die besagte Wächtergruppe einen gewünschten Umfang der besagten an den besagten einen oder die besagten mehreren Wächter in der besagten Wächtergruppe bereitgestellten Präsenzinformationen der besagten ausgewählten Presentity definieren, und wobei der besagte Schritt des Einstellens weiterhin den folgenden Schritt umfasst: Einstellen der besagten Gruppenpräferenzinformationen für die besagte Wächtergruppe als gemeinsame Präferenzinformationen zwischen den besagten jeweiligen mit dem besagten einen oder den besagten mehreren Wächtern in der besagten Wächtergruppe assoziierten Präferenzinformationen.

**Revendications**

**1.** Système de présence (100) pour la gestion des groupes d'utilisateurs, comprenant :

- un serveur de présence (160) pour collecter et stocker des informations de présence (180) et des informations de préférence (190) sur une pluralité de présentités (110), dans lequel lesdites informations de présence (180) pour chacune desdites présentités identifient la disponibilité de ladite présentité respective et dans lequel lesdites informations de préférence (190) pour chacune desdites présentités identifient une étendue desdites informations de présence respectives fournies à un ou plusieurs observateurs (170) de ladite présentité respective (110) ;
- dans lequel ledit serveur de présence (160) est capable d'abonner des groupes d'utilisateurs (210, 220) constitués de membres comprenant une ou plusieurs présentités (110) ou un ou plusieurs observateurs (170) ; et
- dans lequel chacun desdits groupes d'utilisateurs (210, 220) possède des informations de préférence du groupe qui leur sont associées, lesdites informations de préférence du groupe définissant une étendue desdites informations de présence (180) de ladite ou desdites présentités (110) dans un groupe d'utilisateurs, constitué de membres comprenant une ou plusieurs présentités (110), fournies à un observateur choisi parmi lesdits observateurs (170), ou une étendue desdites informations de présence (180) d'une présentité (110) choisie fournies audit ou auxdits observateurs (170) dans un groupe d'utilisateurs constitué de membres comprenant un ou plusieurs observateurs (170) ;

**caractérisé en ce que**

- lesdites informations de préférence du groupe pour ledit groupe d'utilisateurs (210, 220) sont définies selon lesdites informations de préférence (190) respectives associées audit ou auxdits membres dudit groupe d'utilisateurs (210, 220).

**2.** Système de présence selon la revendication 1, dans lequel un desdits groupes d'utilisateurs est un groupe de présentités constitué d'une ou de plusieurs desdites présentités, lesdites informations de préférence du groupe pour ledit groupe de présentités définissant une étendue desdites informations de présence de ladite ou desdites présentités dudit groupe de présentités fournies à un observateur choisi parmi lesdits observateurs.

**3.** Système de présence selon la revendication 2, dans lequel lesdites informations de préférence du groupe comprennent des informations de préférence communes entre chacune parmi ladite ou lesdites présentités dudit groupe de présentités.

**4.** Système de présence selon l'une quelconque des revendications 1 à 3, dans lequel un desdits groupes d'utilisateurs est un groupe d'observateurs pour une présentité choisie parmi lesdites présentités, ledit groupe d'observateurs étant constitué d'un ou de plusieurs parmi lesdits observateurs, lesdites informations de préférence du groupe pour ledit groupe d'observateurs définissant une étendue desdites informations de présence de ladite présentité choisie fournies audit ou auxdits observateurs dudit groupe d'observateurs.

**5.** Système de présence selon la revendication 4, dans lequel lesdites informations de préférence du groupe comprennent des informations de préférence communes entre lesdites informations de préférence respectives associées audit ou auxdits observateurs dudit groupe d'observateurs.

**6.** Système de présence selon l'une quelconque des revendications 1 à 5, dans lequel lesdites informations de préférence pour chacune desdites présentités comprennent des filtres de confidentialité respectifs définissant une étendue autorisée desdites informations de présence respectives fournies à un ou plusieurs observateurs de ladite présentité respective, et dans lequel lesdites informations de préférence du groupe associées à chacun desdits groupes d'utilisateurs, constitués de membres comprenant une ou plusieurs présentités (110), comprennent des filtres de confidentialité du groupe respectifs définis selon lesdits filtres de confidentialité associés à chacun desdits membres dudit groupe d'utilisateurs respectif.

**7.** Système de présence selon l'une quelconque des revendications 1 à 6, dans lequel ledit serveur de présence permet également de collecter et de stocker des informations de préférence pour une pluralité desdits observateurs, et dans lequel lesdites informations de préférence pour chacun desdits observateurs comprennent des filtres d'observateur respectifs définissant une étendue souhaitée desdites informations de présence respectives de ladite ou desdites présentités, et dans lequel lesdites informations de préférence du groupe associées à chacun desdits groupes d'utilisateurs, constitués de membres comprenant un ou plusieurs observateurs (170), comprennent des filtres d'observateur du groupe respectifs définis selon lesdits filtres d'observateur associés à chacun desdits membres dudit groupe d'utilisateurs respectif.

**8.** Procédé de gestion des groupes d'utilisateurs dans des systèmes de présence, comprenant les étapes suivantes :

- fournir (810) des informations de présence (180) et des informations de préférence (190) sur une pluralité de présentités (110), dans lequel lesdites informations de présence (180) pour chacune desdites présentités identifient la disponibilité de ladite présentité respective et lesdites informations de préférence (190) pour chacune desdites présentités identifient une étendue desdites informations de présence respectives fournies à un ou plusieurs observateurs (170) de ladite présentité respective (110) ;
- abonner (820) un groupe d'utilisateurs (210, 220) constitué de membres comprenant une ou plusieurs présentités (110) ou un ou plusieurs observateurs (170) ; et
- définir (830) des informations de préférence du groupe pour ledit groupe d'utilisateurs (210, 220), lesdites informations de préférence du groupe pour ledit groupe d'utilisateurs, constitué de membres comprenant une ou plusieurs présentités (110), définissant une étendue autorisée desdites informations de présence (180) de ladite ou desdites présentités dans ledit groupe d'utilisateurs étant fournies à un observateur choisi parmi lesdits observateurs (170), ou une étendue souhaitée desdites informations de présence (180) d'une présentité (110) choisie fournies audit ou auxdits observateurs (170) dans ledit groupe d'utilisateurs, constitué de membres comprenant un ou plusieurs observateurs (170),

**caractérisé par** l'étape suivante

- définir lesdites informations de préférence du groupe pour ledit groupe d'utilisateurs (210, 220) selon lesdites informations de préférence (190) respectives associées audit ou auxdits membres dudit groupe d'utilisateurs (210, 220).

**9.** Procédé selon la revendication 8, dans lequel ledit groupe d'utilisateurs, constitué de membres comprenant une ou plusieurs présentités (110), est un groupe de présentités constitué d'une ou de plusieurs desdites présentités, lesdites informations de préférence du groupe pour ledit groupe de présentités définissant une étendue autorisée desdites informations de présence de ladite ou desdites présentités dudit groupe de présentités fournies à un observateur choisi parmi lesdits observateurs, et dans lequel ladite étape de définition comprend en outre l'étape suivante: définir lesdites informations de préférence du groupe pour ledit groupe de présentités en tant qu'informations de préférence communes entre chacune parmi ladite ou lesdites présentités dudit groupe de présentités.

10. Procédé selon la revendication 8, dans lequel ledit groupe d'utilisateurs, constitué de membres comprenant un ou plusieurs observateurs (170), est un groupe d'observateurs pour une présentité choisie parmi lesdites présentités, ledit groupe d'observateurs étant constitué d'un ou de plusieurs parmi lesdits observateurs, lesdites informations de préférence du groupe pour ledit groupe d'observateurs définissant une étendue souhaitée desdites informations de présence de ladite présentité choisie fournies audit ou auxdits observateurs dudit groupe d'observateurs, et dans lequel ladite étape de définition comprend en outre l'étape suivante: définir lesdites informations de préférence du groupe pour ledit groupe d'observateurs en tant qu'informations de préférence communes entre lesdites informations de préférence respectives associées audit ou auxdits observateurs dudit groupe d'observateurs.

FIG. 1

*FIG. 2*

*FIG. 3*

*FIG. 4*

*FIG. 5*

PRESENTITY — 110

MY WATCHERS — 380

ONE-TO-MULTIPLE MAPPING

300   385 — INDIVIDUAL WATCHERS

LINK TO INDIVIDUALS

WATCHER GROUPS — 390

500   510

520 — FILTER $p_1$

530 — FILTER $w_1$

WATCHER 1; PRIORITY LEVEL $= 1_1$

WATCHER GROUP œ; PRIORITY LEVEL $= 1_{œ}$

FILTER $p_{œ}$ — 540

FILTER $w_{œ}$ — 550

FILTER $p_2$

FILTER $w_2$

WATCHER 2; PRIORITY LEVEL $= 1_2$

WATCHER GROUP ß; PRIORITY LEVEL $= 1_{ß}$

FILTER $p_{ß}$

FILTER $w_{ß}$

FILTER $p_m$

FILTER $w_m$

WATCHER M; PRIORITY LEVEL $= 1_m$

WATCHER GROUP ζ; PRIORITY LEVEL $= 1_{ζ}$

FILTER $p_{ζ}$

FILTER $w_{ζ}$

800

*FIG. 8*

810 — PROVIDE PREFERENCE INFORMATION FOR PRESENTITIES ON WATCHERS

820 — REGISTER USER GROUP WITH PRESENTITY OR WATCHER MEMBERS

830 — CONFIGURE GROUP PREFERENCE INFORMATION FROM MEMBER PREFERENCE INFORMATION

| | $W_1$ | $W_2$ | | $W_n$ | $WG_1$ | | $WG_t$ |
|---|---|---|---|---|---|---|---|
| $P_1$ | $F(P_1,W_1)$ | $F(P_1,W_2)$ | $\cdots$ | $F(P_1,W_n)$ | $F(P_1,WG_1)$ | $\cdots$ | $F(P_1,WG_t)$ |
| $P_2$ | $F(P_2,W_1)$ | $F(P_2,W_2)$ | $\cdots$ | $F(P_2,W_n)$ | $F(P_2,WG_1)$ | $\cdots$ | $F(P_2,WG_t)$ |
| $\vdots$ | $\vdots$ | $\vdots$ | | $\vdots$ | $\vdots$ | | $\vdots$ |
| $P_m$ | $F(P_m,W_1)$ | $F(P_m,W_2)$ | $\cdots$ | $F(P_m,W_n)$ | $F(P_m,WG_1)$ | $\cdots$ | $F(P_m,WG_t)$ |
| $PG_1$ | $F(PG_1,W_1)$ | $F(PG_1,W_2)$ | $\cdots$ | $F(PG_1,W_n)$ | $F(PG_1,WG_1)$ | $\cdots$ | $F(PG_1,WG_t)$ |
| $\vdots$ | $\vdots$ | $\vdots$ | | $\vdots$ | $\vdots$ | | $\vdots$ |
| $PG_s$ | $F(PG_s,W_1)$ | $F(PG_s,W_2)$ | $\cdots$ | $F(PG_s,W_n)$ | $F(PG_s,WG_1)$ | $\cdots$ | $F(PG_s,WG_t)$ |

600    620

610    630

*FIG. 6*

| | $W_1$ | $W_2$ | $\cdots$ | $W_n$ | $WG_1$ | $\cdots$ | $WG_t$ |
|---|---|---|---|---|---|---|---|
| $P_1$ | $F(W_1,P_1)$ | $F(W_2,P_1)$ | $\cdots$ | $F(W_n,P_1)$ | $F(WG_1,P_1)$ | $\cdots$ | $F(WG_t,P_1)$ |
| $P_2$ | $F(W_1,P_2)$ | $F(W_2,P_2)$ | $\cdots$ | $F(W_n,P_2)$ | $F(WG_1,P_2)$ | $\cdots$ | $F(WG_t,P_2)$ |
| $\vdots$ | $\vdots$ | $\vdots$ | | $\vdots$ | $\vdots$ | | $\vdots$ |
| $P_m$ | $F(W_1,P_m)$ | $F(W_2,P_m)$ | $\cdots$ | $F(W_n,P_m)$ | $F(WG_1,P_m)$ | $\cdots$ | $F(WG_t,P_m)$ |
| $PG_1$ | $F(W_1,PG_1)$ | $F(W_2,PG_1)$ | $\cdots$ | $F(W_n,PG_1)$ | $F(WG_1,PG_1)$ | $\cdots$ | $F(WG_t,PG_1)$ |
| $\vdots$ | $\vdots$ | $\vdots$ | | $\vdots$ | $\vdots$ | | $\vdots$ |
| $PG_s$ | $F(W_1,PG_s)$ | $F(W_2,PG_s)$ | $\cdots$ | $F(W_n,PG_s)$ | $F(WG_1,PG_s)$ | $\cdots$ | $F(WG_t,PG_s)$ |

700    720

710    730

*FIG. 7*

*900*

## FIG. 9

910 — PROVIDE PREFERENCE INFORMATION OF A PRESENTITY AND WATCHERS OF THE PRESENTITY

920 — REGISTER WATCHER GROUP

930 — MANUAL?

YES — MANUALLY SET WATCHER GROUP PREFERENCE INFORMATION — 940

NO

950 — DETERMINE COMMON PREFERENCE INFORMATION FOR WATCHERS

960 — SET WATCHER GROUP PREFERENCE INFORMATION AS COMMON PREFERENCE INFORMATION

*1000*

## FIG. 10

PROVIDE PREFERENCE INFORMATION OF PRESENTITIES AND A WATCHER OF THE PRESENTITIES — 1010

REGISTER PRESENTITY GROUP — 1020

1030 — MANUAL?

YES

NO

1040 — MANUALLY SET PRESENTITY GROUP PREFERENCE INFORMATION

DETERMINE COMMON PREFERENCE INFORMATION AMONG PRESENTITIES ON THE WATCHER — 1050

SET PRESENTITY GROUP PREFERENCE INFORMATION AS COMMON PREFERENCE INFORMATION — 1060

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02063486 A1

**Non-patent literature cited in the description**

- **J. ROSENBERG et al.** SIP: Session Initiation Protocol. *RFC: 3261,* June 2002

- **A. ROACH et al.** Session Initiation Protocol (SIP) - Specific Event Notification. *RFC: 3265,* June 2002